# EUROPEAN PATENT SPECIFICATION

(11) **EP 3 204 461 B1**
(45) Date of publication and mention of the grant of the patent: **27.03.2019**
(21) Application number: 15818025.7
(22) Date of filing: 02.10.2015
(51) Int. Cl.: C09J 133/14, C08K 5/34, C09J 4/00, C08F 220/20, C08K 5/00, C08K 5/3447, C08K 5/3465, C08K 5/3477

(54) **CURE ACCELERATORS FOR ANAEROBIC CURABLE COMPOSITIONS**
HÄRTUNGSBESCHLEUNIGER FÜR ANAEROBE HÄRTBARE ZUSAMMENSETZUNGEN
ACCÉLÉRATEURS DE DURCISSEMENT POUR COMPOSITIONS DURCISSABLES PAR VOIE ANAÉROBIE

(30) Priority: 09.10.2014 GB 201417897
(43) Date of publication of application: 16.08.2017
(73) Proprietor: Henkel IP & Holding GmbH, 40589 Düsseldorf (DE)
(72) Inventor: BIRKETT, David, P., Naas Co. Kildare (IE); MULLEN, David, Navan Co. Meath (IE); HAJATPOUR, Ory, Naas (IE)
(74) Representative: Henkel IP Department
(86) International application number: PCT/IB2015/002088
(87) International publication number: WO 2016/055856

(56) References cited:
- JP-A- S5 915 469
- US-B2- 8 481 659

## Description

### BACKGROUND

### Field

Anaerobic curable compositions, such as adhesives and sealants, are provided, in which as a constituent thereof are compounds shown in structure I 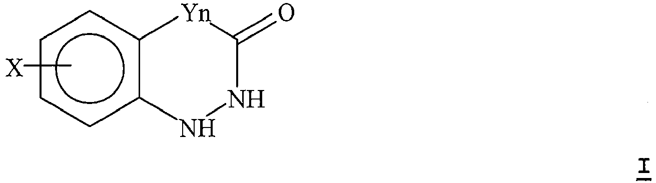 where X is optional, but when present, X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl, haloalkyl or a fused aromatic, cycloaliphatic or heterocyclic ring, Y is O, NH or CHR, where R is H or C₁₋₄ alkyl, and n is 0 or 1.

### Brief Description of Related Technology

Anaerobic adhesive compositions generally are well-known. See e.g. R.D. Rich, "Anaerobic Adhesives" in Handbook of Adhesive Technology, 29, 467-79, A. Pizzi and K.L. Mittal, eds., Marcel Dekker, Inc., New York (1994), and references cited therein. Their uses are legion and new applications continue to be developed.

Conventional anaerobic adhesives ordinarily include a free-radically polymerizable acrylate ester monomer, together with a peroxy initiator and an inhibitor component. Often, such anaerobic adhesive compositions also contain accelerator components to increase the speed with which the composition cures.

Desirable anaerobic cure-inducing compositions to induce and accelerate cure may include one or more of saccharin, toluidines, such as N,N-diethyl-p-toluidine ("DE-p-T") and N,N-dimethyl-o-toluidine ("DM-o-T"), and acetyl phenylhydrazine ("APH") with maleic acid. See e.g. U.S. Patent Nos. 3,218,305 (Krieble), 4,180,640 (Melody), 4,287,330 (Rich) and 4,321,349 (Rich).

Saccharin and APH are used as standard cure accelerator components in anaerobic adhesive cure systems. Indeed, many of the LOCTITE-brand anaerobic adhesive products currently available from Henkel Corporation use either saccharin alone or both saccharin and APH. These chemicals have scrutinized in certain parts of the world, and thus efforts have been undertaken to identify candidates as replacements.

Examples of other curatives for anaerobic adhesives include thiocaprolactam [e.g., U.S. Patent No. 5,411,988)] and thioureas [e.g., U.S. Patent No. 3,970,505 (Hauser) (tetramethyl thiourea), German Patent Document Nos. DE 1 817 989 (alkyl thioureas and N,N'-dicyclohexyl thiourea) and 2 806 701 (ethylene thiourea), and Japanese Patent Document No. JP 07-308,757 (acyl, alkyl, alkylidene, alkylene and alkyl thioureas)], certain of the latter of which had been used commercially up until about twenty years ago.

Trithiadiaza pentalenes have also been shown to be effective as curatives for anaerobic adhesive compositions. The addition of these materials into anaerobic adhesives as a replacement for conventional curatives (such as APH) surprisingly provides at least comparable cure speeds and physical properties for the reaction products formed therefrom. See U.S. Patent No. 6,583,289 (McArdle).

U.S. Patent No. 6,835,762 (Klemarczyk) provides an anaerobic curable composition based on a (meth)acrylate component with an anaerobic cure-inducing composition substantially free of acetyl phenylhydrazine and maleic acid and an anaerobic cure accelerator compound having the linkage -C(=O)-NH-NH- and an organic acid group on the same molecule, provided the anaerobic cure accelerator compound excludes 1-(2-carboxyacryloyl)-2-phenylhydrazine. The anaerobic cure accelerator is embraced by: 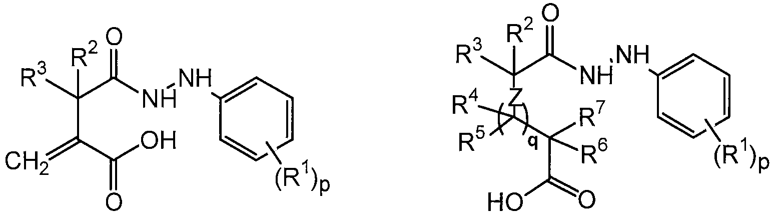 where R¹-R⁷ are each independently selected from hydrogen and C₁₋₄; Z is a carbon-carbon single bond or carbon-carbon double bond; q is 0 or 1; and p is between 1 and 5, examples of which are 3-carboxyacryloyl phenylhydrazine, methyl-3-carboxyacryloyl phenylhydrazine, 3-carboxypropanoyl phenylhydrazine, and methylene-3-carboxypropanoyl phenylhydrazine.

U.S. Patent No. 6,897,277 (Klemarczyk) provides an anaerobic curable composition based on a (meth)acrylate component with an anaerobic cure-inducing composition substantially free of saccharin and an anaerobic cure accelerator compound within the following structure 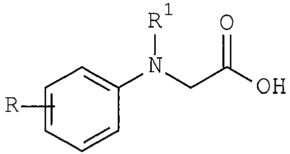 where R is selected from hydrogen, halogen, alkyl, alkenyl, hydroxyalkyl, hydroxyalkenyl, carboxyl, and sulfonato, and R¹ is selected from hydrogen, alkyl, alkenyl, hydroxyalkyl, hydroxyalkenyl, and alkaryl, an example of which is phenyl glycine and N-methyl phenyl glycine.

U.S. Patent No. 6,958,368 (Messana) provides an anaerobic curable composition. This composition is based on a (meth)acrylate component with an anaerobic cure-inducing composition substantially free of saccharin and within the following structure 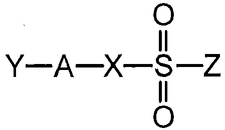 where Y is an aromatic ring, optionally substituted at up to five positions by C₁₋₆ alkyl or alkoxy, or halo groups; A is C=O, S=O or O=S=O; X is NH, 0 or S and Z is an aromatic ring, optionally substituted at up to five positions by C₁₋₆ alkyl or alkoxy, or halo groups, or Y and Z taken together may join to the same aromatic ring or aromatic ring system, provided that when X is NH, o-benzoic sulfimide is excluded from the structure. Examples of the anaerobic cure accelerator compound embraced by the structure above include 2-sulfobenzoic acid cyclic anhydride, and 3H-1,2-benzodithiol-3-one-1,1-dioxide.

Three Bond Co. Ltd., Tokyo, Japan has in the past described as a component in anaerobic adhesive and sealant compositions a component called tetrahydroquinoline ("THQ").

And more recently Henkel Corporation has demonstrated the efficacy of new cure accelerators. The first class is within the structure below 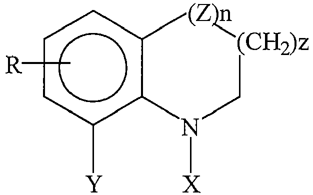 where X is H, C₁₋₂₀ alkyl, C₂₋₂₀ alkenyl, or C₇₋₂₀ alkaryl, any of the latter three of which may be interrupted by one or more hereto atoms or functionalized by one or more groups selected from -OH, -NH₂ or -SH, or X and Y taken together form a carbocyclic ring having from 5-7 ring atoms; Z is O, S, or NX', where X' is H, C₁₋₂₀ alkyl, C₂₋₂₀ alkenyl, or C₇₋₂₀ alkaryl, any of the latter three of which may be interrupted by one or more hereto atoms or functionalized by one or more groups selected from -OH, -NH₂ or -SH; R is optional but when present may occur up to 3 times on the aromatic ring and when present is C₁₋₂₀ alkyl, C₂₋₂₀ alkenyl, or C₇₋₂₀ alkaryl, any of the latter three of which may be interrupted by one or more hereto atoms or functionalized by one or more groups selected from -OH, -NH₂ or -SH; and n is 0 and 1 and z is 1-3, provided that when X is H, z is not 2 and is preferably 1. More specifically, THQ-based or indoline-based adducts may be embraced thereby. (See U.S. Patent No. 8,481,659.)

The second class is within the structure below 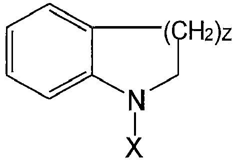 where X is C₁₋₂₀ alkyl, C₂₋₂₀ alkenyl, or C₇₋₂₀ alkaryl, any of which may be interrupted by one or more hereto atoms, and which are functionalized by at least one and preferably at least two groups selected from -OH, -NH₂ or -SH and z is 1-3. (See U.S. Patent No. 8,362,112.)

Notwithstanding the state of the art, there is an ongoing desire to find alternative technologies for anaerobic cure accelerators to differentiate existing products and provide supply assurances in the event of shortages or cessation of supply of raw materials. Moreover, since certain of the raw materials used in conventional anaerobic cure inducing compositions have to one degree or another come under regulatory scrutiny, alternative components for anaerobic cure inducing compositions would be desirable. Accordingly, it would be desirable to identify new materials that function as cure components in the cure of anaerobically curable compositions.

### SUMMARY

Anaerobic curable compositions, such as adhesives and sealants, are provided with another option for additives to satisfy that desire.

The compounds useful in anaerobic curable compositions are defined with reference to structure **I:** 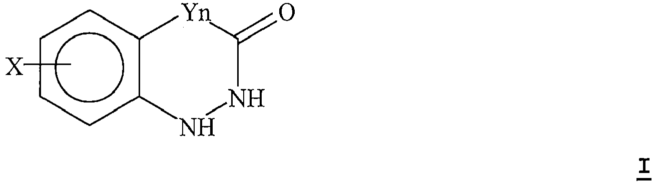 where X is optional, but when present, X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl, haloalkyl or a fused aromatic, cycloaliphatic or heterocyclic ring, Y is O, NH or CHR, where R is H or C₁₋₄ alkyl, and n is 0 or 1.

Methods of preparing and using anaerobically curable compositions prepared with the cure accelerators within structure **I** also are provided, as well are the reaction products of the anaerobically curable compositions.

In addition, compounds within structure **I** are also provided.

### BRIEF DESCRIPTION OF THE FIGURE

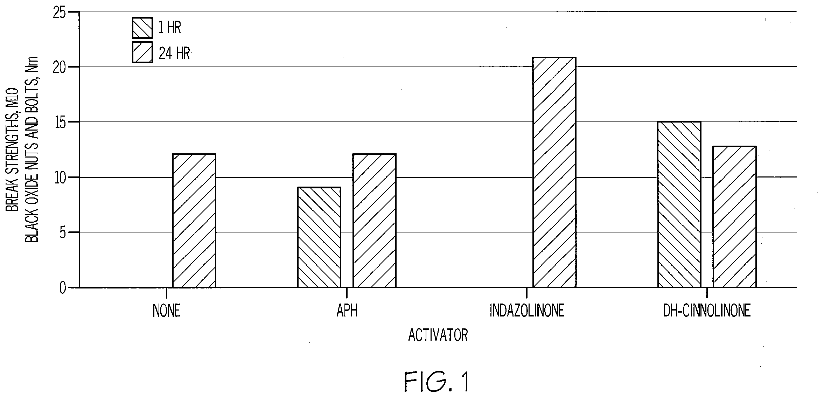

FIG. 1 depicts a plot of break strength vs. cure time of the anaerobic adhesive compositions, some of which using the inventive cure accelerators and others using conventional ones, on M10 black oxide nuts and bolts.

### DETAILED DESCRIPTION

As noted above, cure accelerators for anaerobic curable compositions, such as adhesives and sealants, are provided, and which are defined with reference to the compound shown in structure **I.**

The addition of such compounds as cure accelerators into anaerobic curable compositions as a replacement for some or all of the amount of conventional anaerobic cure accelerators (such as the toluidines, DE-p-T and DM-o-T, and/or APH) and indoline, surprisingly develops ultimate adhesive properties, while are comparable to those observed from conventional anaerobic curable compositions.

Cure accelerators for anaerobic curable compositions, such as adhesives and sealants, are provided, and which are defined with reference to the compound shown in structure **I** 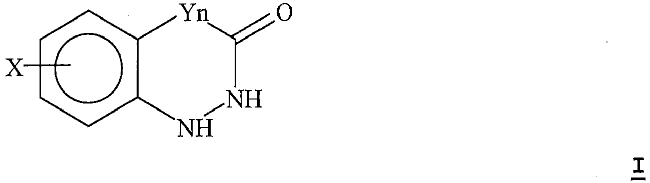 where X is optional, but when present, X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl, haloalkyl or a fused aromatic, cycloaliphatic or heterocyclic ring, Y is O, NH or CHR, where R is H or C₁₋₄ alkyl, and n is 0 or 1.

Specific examples of compounds within structure **I** are:

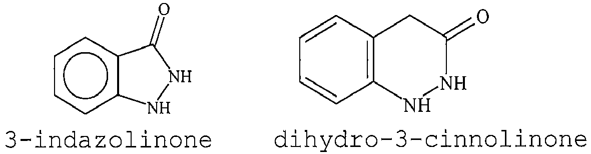

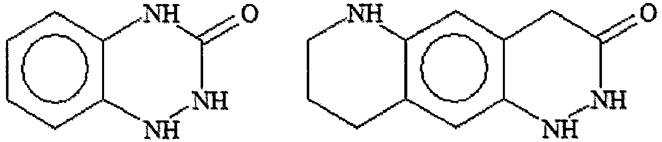

Compounds within structure **I** may be prepared using the synthetic scheme laid out by G. Winters et al., "New Heterocyclic Compounds Derived from 1,4-Dihydro-3(2H)-Cinnolinone. Cyclic Hydrazides. I", J. Hetero. Chem., 11, 6, 997-1000 (1979).

Anaerobic curable compositions generally are based on a (meth)acrylate component, together with an anaerobic cure-inducing composition. In the present invention, the anaerobic cure-inducing composition, has at least reduced levels of APH or toluidines (such as about 50% or less by weight of that which is used in conventional anaerobic curable compositions, for instance less than about 10 weight percent, such as less than about 5 weight percent, and desirably less than about 1 weight percent) or is free of APH or toluidines altogether. In place of some or all of APH or toluidines is the inventive cure accelerator -- that is, compounds embraced by structure **I.**

(Meth)acrylate monomers suitable for use as the (meth)acrylate component in the present invention may be selected from a wide variety of materials, such as those represented by H₂C=CGCO₂R¹⁰, where G may be hydrogen, halogen or alkyl groups having from 1 to about 4 carbon atoms, and R¹⁰ may be selected from alkyl, cycloalkyl, alkenyl, cycloalkenyl, alkaryl, alkaryl or aryl groups having from 1 to about 16 carbon atoms, any of which may be optionally substituted or interrupted as the case may be with silane, silicon, oxygen, halogen, carbonyl, hydroxyl, ester, carboxylic acid, urea, urethane, carbonate, amine, amide, sulfur, sulfonate, sulfone and the like.

Additional (meth)acrylate monomers suitable for use herein include polyfunctional (meth)acrylate monomers, for example di-or tri-functional (meth)acrylates such as polyethylene glycol di(meth)acrylates, tetrahydrofuran (meth)acrylates and di(meth)acrylates, hydroxypropyl (meth)acrylate ("HPMA"), hexanediol di(meth)acrylate, trimethylol propane tri(meth)acrylates ("TMPTMA"), diethylene glycol dimethacrylate, triethylene glycol dimethacrylates ("TRIEGMA"), tetraethylene glycol di(meth)acrylates, dipropylene glycol di(meth)acrylates, di-(pentamethylene glycol) di(meth)acrylates, tetraethylene diglycol di(meth)acrylates, diglycerol tetra(meth)acrylates, tetramethylene di(meth)acrylates, ethylene di(meth)acrylates, neopentyl glycol di(meth)acrylates, and bisphenol-A mono and di(meth)acrylates, such as ethoxylated bisphenol-A (meth)acrylate ("EBIPMA"), and bisphenol-F mono and di(meth)acrylates, such as ethoxylated bisphenol-A (meth)acrylate.

Still other (meth)acrylate monomers that may be used herein include silicone (meth)acrylate moieties ("SiMA"), such as those taught by and claimed in U.S. Patent No. 5,605,999 (Chu).

Other suitable monomers include polyacrylate esters represented by the formula 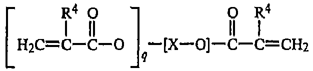 where R⁴ is a radical selected from hydrogen, halogen or alkyl of from 1 to about 4 carbon atoms; q is an integer equal to at least 1, and preferably equal to from 1 to about 4; and X is an organic radical containing at least two carbon atoms and having a total bonding capacity of q plus 1. With regard to the upper limit for the number of carbon atoms in X, workable monomers exist at essentially any value. As a practical matter, however, a general upper limit is about 50 carbon atoms, such as desirably 30, and desirably about 20.

For example, X can be an organic radical of the formula: 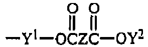 where each of Y¹ and Y² is an organic radical, such as a hydrocarbon group, containing at least 2 carbon atoms, and desirably from 2 to about 10 carbon atoms, and Z is an organic radical, preferably a hydrocarbon group, containing at least 1 carbon atom, and preferably from 2 to about 10 carbon atoms.

Other classes of useful monomers are the reaction products of di- or tri-alkylolamines (e.g., ethanolamines or propanolamines) with acrylic acids, such as are disclosed in French Pat. No. 1,581,361.

Oligomers with (meth)acrylate functionality may also be used. Examples of useful (meth)acrylate-functionalized oligomers include those having the following general formula: 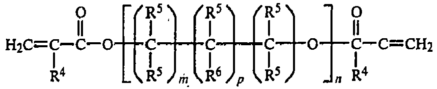 where R⁵ represents a radical selected from hydrogen, lower alkyl of from 1 to about 4 carbon atoms, hydroxy alkyl of from 1 to about 4 carbon atoms, or 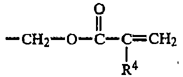 where R⁴ is a radical selected from hydrogen, halogen, or lower alkyl of from 1 to about 4 carbon atoms; R⁶ is a radical selected from hydrogen, hydroxyl, or 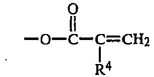 m is an integer equal to at least 1, e.g., from 1 to about 15 or higher, and desirably from 1 to about 8; n is an integer equal to at least 1, e.g., 1 to about 40 or more, and desirably between about 2 and about 10; and p is 0 or 1.

Typical examples of acrylic ester oligomers corresponding to the above general formula include di-, tri- and tetraethyleneglycol dimethacrylate; di(pentamethyleneglycol)dimethacrylate; tetraethyleneglycol diacrylate; tetraethyleneglycol di(chloroacrylate); diglycerol diacrylate; diglycerol tetramethacrylate; butyleneglycol dimethacrylate; neopentylglycol diacrylate; and trimethylolpropane triacrylate.

While di- and other polyacrylate esters, and particularly the polyacrylate esters described in the preceding paragraphs, can be desirable, monofunctional acrylate esters (esters containing one acrylate group) also may be used. When dealing with monofunctional acrylate esters, it is highly preferable to use an ester which has a relatively polar alcoholic moiety. Such materials are less volatile than low molecular weight alkyl esters and, more important, the polar group tends to provide intermolecular attraction during and after cure, thus producing more desirable cure properties, as well as a more durable sealant or adhesive. Most preferably, the polar group is selected from labile hydrogen, heterocyclic ring, hydroxy, amino, cyano, and halo polar groups. Typical examples of compounds within this category are cyclohexylmethacrylate, tetrahydrofurfuryl methacrylate, hydroxyethyl acrylate, hydroxypropyl methacrylate, t-butylaminoethyl methacrylate, cyanoethylacrylate, and chloroethyl methacrylate.

Another useful class of materials are the reaction product of (meth)acrylate-functionalized, hydroxyl- or amino-containing materials and polyisocyanate in suitable proportions so as to convert all of the isocyanate groups to urethane or ureido groups, respectively. The so-formed (meth)acrylate urethane or urea esters may contain hydroxy or amino functional groups on the nonacrylate portion thereof. (Meth)acrylate esters suitable for use have the formula 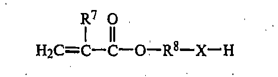 where X is selected from --O-- and 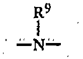 , where R⁹ is selected from hydrogen or lower alkyl of 1 through 7 carbon atoms; R⁷ is selected from hydrogen, halogen (such as chlorine) or alkyl (such as methyl and ethyl radicals); and R⁸ is a divalent organic radical selected from lower alkylene of 1 through 8 carbon atoms, phenylene and naphthylene. These groups upon proper reaction with a polyisocyanate, yield a monomer of the following general formula: 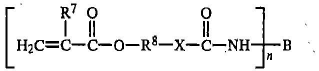 where n is an integer from 2 to about 6; B is a polyvalent organic radical selected from alkyl, alkenyl, cycloalkyl, cycloalkenyl, aryl, alkaryl, alkaryl and heterocyclic radicals both substituted and unsubstituted, and combinations thereof; and R⁷, R⁸ and X have the meanings given above.

Depending on the nature of B, these (meth)acrylate esters with urea or urethane linkages may have molecular weights placing them in the oligomer class (such as about 1,000 up to about 5,000) or in the polymer class (such as about greater than 5,000).

Of course, combinations of these (meth)acrylate monomers may also be used.

The (meth)acrylate component may comprise from about 10 to about 90 percent by weight of the composition, such as about 60 to about 90 percent by weight, based on the total weight of the composition.

Additional components have in the past been included in traditional anaerobic adhesive and/or sealant compositions to alter the physical properties of either the formulation or the reaction products thereof. For instance, one or more of thermal resistance-conferring co-reactants (such as maleimide components), diluent components reactive at elevated temperature conditions, mono- or poly-hydroxyalkanes, polymeric plasticizers, thickeners, non-reactive plasticizers, fillers, toughening agents (such as elastomers and rubbers) and chelators (see U.S. Patent No. 6,391, 993) may be included to modify the physical property and/or cure profile of the formulation and/or the strength or temperature resistance of the cured adhesive.

When used, the co-reactant, reactive diluent, plasticizer, mono- or poly-hydroxyalkanes, filler and/or toughening agent may be present in an amount within the range of about 1 percent to about 30 percent by weight, based on the total weight of the composition.

The inventive compositions may also include other conventional components, such as free radical initiators, free radical co-accelerators, and inhibitors of free radical generation, as well as metal catalysts.

A number of well-known initiators of free radical polymerization are typically incorporated into anaerobic curable compositions including, without limitation, hydroperoxides, such as cumene hydroperoxide ("CHP"), para-menthane hydroperoxide, t-butyl hydroperoxide ("TBH") and t-butyl perbenzoate. Other peroxides include benzoyl peroxide, dibenzoyl peroxide, 1,3-bis(t-butylperoxyisopropyl)benzene, diacetyl peroxide, butyl 4,4-bis(t-butylperoxy)valerate, p-chlorobenzoyl peroxide, t-butyl cumyl peroxide, t-butyl perbenzoate, di-t-butyl peroxide, dicumyl peroxide, 2,5-dimethyl-2,5-di-t-butylperoxyhexane, 2,5-dimethyl-2,5-di-t-butyl-peroxyhex-3-yne, 4-methyl-2,2-di-t-butylperoxypentane, t-amyl hydroperoxide, 1,2,3,4-tetramethylbutyl hydroperoxide and combinations thereof.

Such peroxides are typically employed in the present invention in the range of from about 0.1 to about 10 percent by weight, based on the total weight of the composition, with about 1 to about 5 percent by weight being desirable.

As noted, conventional accelerators of free radical polymerization may also be used in conjunction with the inventive anaerobic cure accelerators, though in amounts less than that used in the past. Such accelerators are typically of the hydrazine variety (e.g., APH), as disclosed in U.S. Patent Nos. 4,287,350 (Rich) and 4,321,349 (Rich). Maleic acid is ordinarily added to APH-containing anaerobic cure inducing compositions.

Co-accelerators of free radical polymerization may also be used, chief among them being aromatic sulfimides, such as benzoic sulfimide (also known as saccharin) (see U.S. Patent No. 3,218,305).

Stabilizers and inhibitors (such as phenols including hydroquinone and ketones including quinones) may also be employed to control and prevent premature peroxide decomposition and polymerization of the composition of the present invention, as well as chelating agents [such as the tetrasodium salt of ethylenediamine tetraacetic acid ("EDTA")] to trap trace amounts of metal contaminants therefrom. When used, chelating agents may ordinarily be present in the compositions in an amount from about 0.001 percent by weight to about 0.1 percent by weight, based on the total weight of the composition.

The inventive cure accelerators may be used in amounts of about 0.1 to about 5 percent by weight, such as about 1 to about 2 percent by weight, based on the total weight of the composition. When used in combination with conventional accelerators (though at lower levels than such conventional accelerators), the inventive accelerators should be used in amounts of about 0.01 to about 5 percent by weight, such as about 0.02 to about 2 percent by weight, based on the total weight of the composition.

The compositions of the present invention may be prepared using conventional methods which are well known to those persons of skill in the art. For instance, the components of the inventive anaerobic adhesive and sealant compositions may be mixed together in any convenient order consistent with the roles and functions the components are to perform in the compositions. Conventional mixing techniques using known apparatus may be employed.

The compositions of this invention may be applied to a variety of substrates to perform with the desired benefits and advantages described herein. For instance, appropriate substrates may be constructed from steel, brass, copper, aluminum, zinc, and other metals and alloys, ceramics and thermosets. An appropriate primer for anaerobic curable compositions may be applied to a surface of the chosen substrate to enhance cure rate. Or, the inventive anaerobic cure accelerators may be applied to the surface of a substrate as a primer. See e.g. U.S. Patent No. 5,811,473 (Ramos).

In addition, a method of preparing an anaerobic curable composition, includes a step of mixing together a (meth)acrylate component, and the anaerobic cure-inducing composition comprising the combination of peroxide and compound shown in structure **I.**

A process for preparing a reaction product from the anaerobic curable composition of the present invention, includes the steps of applying the composition to a desired substrate surface and exposing the composition to an anaerobic environment for a time sufficient to cure the composition.

This invention also provides a method of using as a cure accelerator for anaerobic curable composition, compounds of structure **I**. That method involves providing an anaerobic curable composition comprising a (meth)acrylate component and an anaerobic cure-inducing composition; providing compounds of structure **I** to the anaerobic curable composition; and exposing the anaerobic curable composition and the cure accelerator to conditions favorable to cure the composition.

And the present invention provides a method of using a compound of structure **I**, including (I) mixing the compound of structure **I** in an anaerobic curable composition or (II) applying onto a surface of a substrate the compound of structure **I** and applying thereover an anaerobic curable composition. Of course, the present invention also provides a bond formed between mated substrates with the inventive composition.

In view of the above description of the present invention, it is clear that a wide range of practical opportunities are provided. The following examples are illustrative purposes only, and are not to be construed so as to limit in any way the teaching herein.

### EXAMPLES

### Preparation of Anaerobic Curable Compositions

The following components listed in the table below were used to make anaerobic curable compositions for evaluation:

| **Constituents** | **Wt %** |
|---|---|
| Polyethyleneglycol dimethacrylate | 50 |
| Triethyleneglycol dimethacrylate | 13.5 |
| Urethane methacrylate* | 31.5 |
| 3.5% Na₄EDTA solution | 2 |
| Compound **I** | 0.25 |
| Saccharin | 1 |
| CHP | 1 |
| 5% Naphthoquinone solution | 0.4 |
| Total | 100 |

| | |
|---|---|
| * reaction product of 1 mole MDI plus 2 moles hydroxypropylmethacrylate. | |

Fifteen nut and bolt specimens of M10 black oxide nuts and bolts were assembled for each formulation tested. The specimens were maintained at ambient temperature for 1 hour and 24 hours after assembly in the break adhesion tests. The break strengths (measured in Nm) were then recorded after 1 hour and 24 hours at room temperature (25°C).

Break (measured as break torque) is the initial torque required to decrease or eliminate the axial load in a seated assembly. Prevail torque, after initial breakage of the bond, is measured at any point during 360° rotation of the nut. Prevail torque is normally determined at 180° rotation of the nut.

The torque strengths were measured using a calibrated automatic torque analyzer. The data for the evaluations is set forth below in the Table and in FIG. 1.

Adhesive strength data for indazolinone and 1,4-dihydro-3-cinnolinone, and APH and nothing as controls for activation, in the formulation are captured in the Table below and shown as bar charts in FIG. 1.

In the Table below, the break strength (measured in Nm after the noted time interval) with the various accelerators is shown.

| **Activator** | **1 hour** | **24 hours** |
|---|---|---|
| None | 0 | 12 |
| Acetylphenylhydrazine | 9 | 12 |
| Indazolinone | 0 | 21 |
| 1,4-dihydro-3-cinnolinone | 15 | 13 |

These data are shown graphically with reference to FIG. 1.

The results indicate that formulations in accordance with this invention exhibited acceptable break strength at room temperature. The lower odor exhibited by the inventive formulations coupled with expected reduced toxicity of the constituents may lead to less rigorous regulatory requirements and as a result may prove useful in some commercial applications and environments, and is another benefit to these compounds as cure accelerators in anaerobic curable compositions.

## Claims

1. An anaerobic curable composition comprising
(a) a (meth)acrylate component;
(b) an anaerobic cure-inducing composition; and
(c) a compound shown in structure **I** 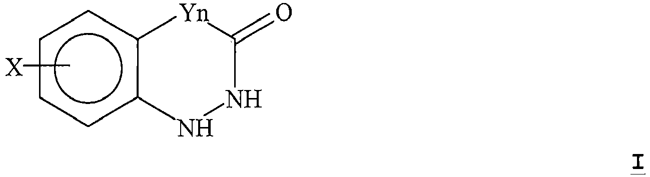 wherein X is optional, but when present, X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl, haloalkyl or a fused aromatic, cycloaliphatic or heterocyclic ring, Y is O, NH or CHR, where R is H or C₁₋₄ alkyl, and n is 0 or 1.

2. The composition according to claim 1, wherein the anaerobic cure-inducing composition comprises a hydroperoxide selected from the group consisting of cumene hydroperoxide, para-menthane hydroperoxide, t-butyl hydroperoxide, t-butyl perbenzoate, benzoyl peroxide, dibenzoyl peroxide, 1,3-bis(t-butylperoxyisopropyl)benzene, diacetyl peroxide, butyl-4,4-bis(t-butylperoxy)valerate, p-chlorobenzoyl peroxide, t-butyl cumyl peroxide, t-butyl perbenzoate, di-t-butyl peroxide, dicumyl peroxide, 2,5-dimethyl-2,5-di-t-butylperoxyhexane, 2,5-dimethyl-2,5-di-t-butyl-peroxyhex-3-yne, 4-methyl-2,2-di-t-butylperoxypentane, t-amyl hydroperoxide, 1,2,3,4-tetramethylbutyl hydroperoxide and combinations thereof.

3. The composition according to claim 1, further comprising at least one co-accelerator.

4. The composition according to claim 3, wherein the co-accelerator is selected from the group consisting of amines, amine oxides, sulfimides, metals and sources thereof, acids, and mixtures thereof.

5. The composition according to claim 3, wherein the co-accelerator is selected from the group consisting of triazines, ethanolamine, diethanolamine, triethanolamine, N,N-dimethyl aniline, cyclohexyl amine, triethyl amine, butyl amine, saccharin, N,N-diethyl-p-toluidine, N,N-dimethyl-o-toluidine, and acetyl phenylhydrazine with maleic acid, and mixtures thereof.

6. The composition according to claim 1, further comprising at least one stabilizer.

7. The composition according to claim 6, wherein the stabilizer is selected from the group consisting of benzoquinone, naphthoquinone, anthraquinone, hydroquinone, methoxyhydroquinone, butylated hydroxy toluene, ethylene diamine tetraacetic acid or a salt thereof, and mixtures thereof.

8. A method of using in anaerobic curable compositions a compound shown in structure **I:** 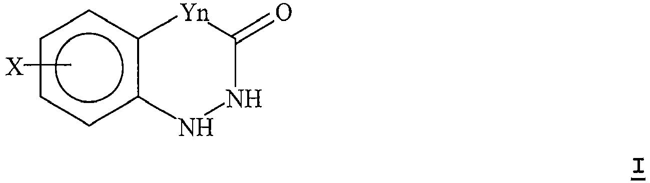 wherein X is optional, but when present, X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl, haloalkyl or a fused heterocyclic ring, Y is O, NH or CH₂, and n is 0 or 1, comprising the steps of:
(a) providing an anaerobic curable composition comprising a (meth)acrylate component and an anaerobic cure-inducing composition;
(b) providing a compound shown in structure **I:** 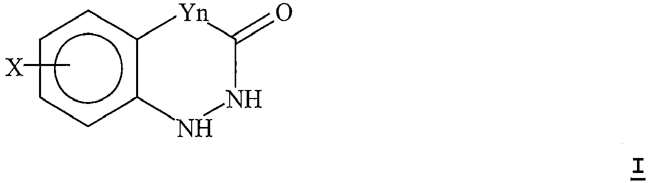 wherein X is optional, but when present, X is halogen, alkyl, alkenyl, cycloalkyl, hydroxyalkyl, hydroxyalkenyl, alkoxy, amino, alkylene- or alkenylene-ether, alkylene (meth)acrylate, carbonyl, carboxyl, nitroso, sulfonate, hydroxyl, haloalkyl or a fused aromatic, cycloaliphatic or heterocyclic ring, Y is O, NH or CHR, where R is H or C₁₋₄ alkyl, and n is 0 or 1; and
(c) exposing the anaerobic curable composition and the cure accelerator to conditions favorable to cure the composition.

9. The composition of Claim 1, wherein the compound shown in structure **I** is selected from

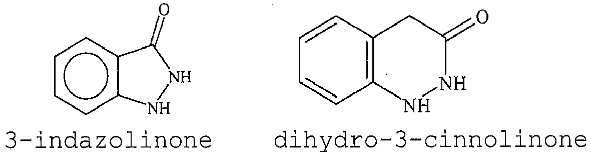

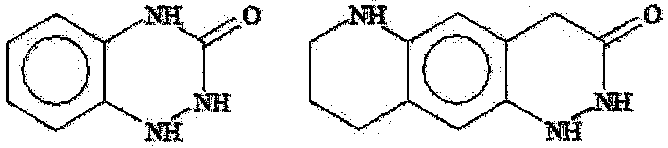

## Patentansprüche

1. Anaerobe härtbare Zusammensetzung, umfassend:
(a)eine (Meth)acrylatkomponente;
(b)eine anaerobe härtungsinduzierende Zusammensetzung; und
(c)eine in Struktur I gezeigte Verbindung 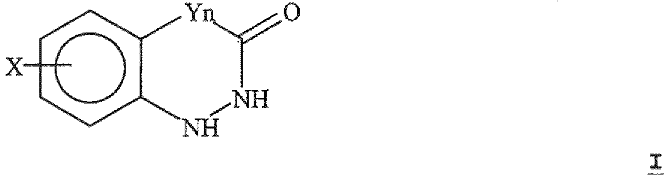 worin X optional ist, wenn es jedoch vorhanden ist, ist X Halogen, Alkyl, Alkenyl, Cycloalkyl, Hydroxyalkyl, Hydroxyalkenyl, Alkoxy, Amino, Alkylen- oder Alkenylenether, Alkylen(meth)acrylat, Carbonyl, Carboxyl, Nitroso, Sulfonat, Hydroxyl, Haloalkyl oder ein fusionierter aromatischer cylcoaliphatischer oder heterocyclischer Ring, Y ist 0, NH oder CHR, worin R H oder C₁₋₄-Alkyl ist, und n 0 oder 1 ist.

2. Zusammensetzung nach Anspruch 1, wobei die anaerobe härtungsinduzierende Zusammensetzung ein Hydroperoxid umfasst, das ausgewählt ist aus der Gruppe, bestehend aus Cumenhydroperoxid, para-Menthanhydroperoxid, t-Butylhydroperoxid, t-Butylperbenzoat, Benzoylperoxid, Dibenzoylperoxid, 1,3-bis(t-Butylperoxyisopropyl)benzol, Diacetylperoxid, Butyl-4,4-bis(t-butylperoxy)valerat, p-Chlorobenzoylperoxid, t-Butylcumylperoxid, t-Butylperbenzoat, di-t-Butylperoxid, Dicumylperoxid, 2,5-Dimethyl-2,5-di-t-butylperoxyhexan, 2,5-Dimethyl-2,5-di-t-butyl-peroxyhex-3-yne, 4-Methyl-2,2-di-t-Butylperoxypentan, t-Amylhydroperoxid, 1,2,3,4-Tetramethylbutylhydroperoxid und Kombinationen davon.

3. Zusammensetzung nach Anspruch 1, ferner umfassend mindestens einen Co-Beschleuniger.

4. Zusammensetzung nach Anspruch 3, wobei der Co-Beschleuniger ausgewählt ist aus der Gruppe, bestehend aus Aminen, Aminoxiden, Sulfimiden, Metallen und Quellen davon, Säuren und Mischungen davon.

5. Zusammensetzung nach Anspruch 3, wobei der Co-Beschleuniger ausgewählt ist aus der Gruppe, bestehend aus Triazinen, Ethanolamin, Diethanolamin, Triethanolamin, N,N-Dimethylanilin, Cyclohexylamin, Triethylamin, Butylamin, Saccharin, N,N-Diethyl-p-Toluidin, N,N-dimethyl-o-toluidin, und Acetylphenylhydrazin mit Maleinsäure, und Mischungen davon.

6. Zusammensetzung nach Anspruch 1, ferner umfassend mindestens einen Stabilisator.

7. Zusammensetzung nach Anspruch 6, wobei der Stabilisator ausgewählt ist aus der Gruppe, bestehend aus Benzoquinon, Naphthoquinon, Anthraquinon, Hydroquinon, Methoxyhydroquinon, butyliertem Hydroxytoluen, Ethylendiamintetraessigsäure oder einem Salz davon, oder Mischungen davon.

8. Verfahren zur Verwendung einer in Struktur I gezeigten Verbindung in einer anaeroben härtbaren Zusammensetzung: 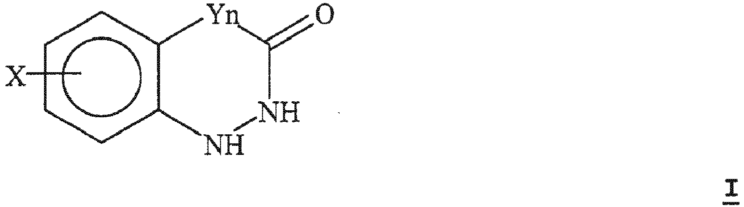 worin X optional ist, wenn es jedoch vorhanden ist, ist X Halogen, Alkyl, Alkenyl, Cycloalkyl, Hydroxyalkyl, Hydroxyalkenyl, Alkoxy, Amino, Alkylen- oder Alkenylenether, Alkylen(meth)acrylat, Carbonyl, Carboxyl, Nitroso, Sulfonat, Hydroxyl, Haloalkyl oder ein fusionierter aromatischer cylcoaliphatischer oder heterocyclischer Ring, Y ist 0, NH oder CH₂, und n ist 0 oder 1 ist, umfassend die folgenden Schritte:
(a)Bereitstellung einer anaeroben härtbaren Zusammensetzung, die eine (Meth)acrylatkomponente und eine anaerobe härtbare Zusammensetzung umfasst;
(b)Bereitstellung einer in Struktur I gezeigten Verbindung: 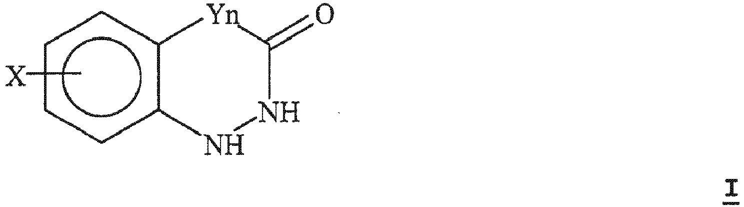 worin X optional ist, wenn es jedoch vorhanden ist, ist X Halogen, Alkyl, Alkenyl, Cycloalkyl, Hydroxyalkyl, Hydroxyalkenyl, Alkoxy, Amino, Alkylen- oder Alkenylenether, Alkylen(meth)acrylat, Carbonyl, Carboxyl, Nitroso, Sulfonat, Hydroxyl, Haloalkyl oder ein fusionierter aromatischer cylcoaliphatischer oder heterocyclischer Ring, Y ist 0, NH oder CHR, worin R H oder C₁₋₄-Alkyl ist, und n 0 oder 1 ist; und
(c)Aussetzen er anaeroben härtbaren Zusammensetzung und des Härtungsbeschleunigers gegenüber Bedingungen, die das Härten der Zusammensetzung begünstigen.

9. Zusammensetzung nach Anspruch 1, wobei die in Struktur I gezeigte Verbindung ausgewählt ist aus

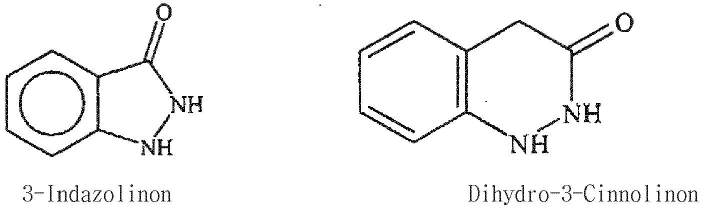

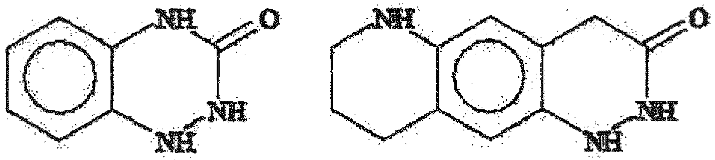

## Revendications

1. Composition durcissable anaérobique comprenant
(a) un composant méthacrylate ;
(b) une composition provoquant un durcissement anaérobique ; et
(c) un composé représenté par la structure I 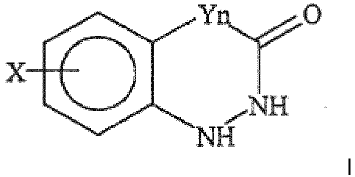 dans laquelle X est facultatif, mais lorsqu'il est présent, X représente un halogène, un alkyle, un alcényle, un cycloalkyle, un hydroxyalkyle, un hydroxyalcényle, un alcoxy, amino, un alkylène ou un alcénylène éther, un méthacrylate d'alkylène, carbonyle, carboxyle, nitroso, sulfonate, hydroxyle, un halogénoalkyle ou un cycle aromatique, cycloaliphatique ou hétérocyclique fusionné, et où Y représente O, NH, ou CHR, où R représente H ou un alkyle en C₁-C₄, et où n vaut 0 ou 1.

2. Composition selon la revendication 1, dans laquelle la composition provoquant un durcissement anaérobique comprend un hydroperoxyde choisi dans l'ensemble constitué de l'hydroperoxyde de cumène, de l'hydroperoxyde de para-menthane, de l'hydroperoxyde de t-butyle, du perbenzoate de t-butyle, du peroxyde de benzoyle, du peroxyde de dibenzoyle, du 1,3-bis(t-butylperoxyisopropyl) benzène, du peroxyde de diacétyle, du 4,4-bis(t-butylperoxy)valérate de butyle, du peroxyde de p-chlorobenzoyle, du peroxyde de t-butylcumyle, du perbenzoate de t-butyle, du peroxyde de di-t-butyle, du peroxyde de dicumyle, du 2,5-diméthyl-2,5-di-t-butylperoxyhexane, du 2,5-diméthyl-2,5-di-t-butyl-peroxyhex-3-yne, du 2,2-di-t-butylperoxypentane de 4-méthyle, de l'hydroperoxyde de t-amyle, de l'hydroperoxyde de 1,2,3,4-tétraméthylbutyle et de leurs combinaisons.

3. Composition selon la revendication 1, comprenant en outre au moins un co-accélérateur.

4. Composition selon la revendication 3, dans laquelle le co-accélérateur est choisi dans le groupe constitué d'amines, d'oxydes d'amines, de sulfimides, de métaux et de sources de ceux-ci, d'acides et de mélanges de ceux-ci.

5. Composition selon la revendication 3, dans laquelle le co-accélérateur est choisi dans le groupe constitué des triazines, de l'éthanolamine, de la diéthanolamine, de la triéthanolamine, de la N,N-diméthylaniline, de la cyclohexylamine, de la triéthylamine, de la butylamine, de la saccharine, de la N,N-diéthyl-p-toluidine, de la N,N-diméthyl-o-toluidine, et de l'acétyl phénylhydrazine avec de l'acide maléique et des mélanges de celles-ci.

6. Composition selon la revendication 1, comprenant en outre au moins un stabilisateur.

7. Composition selon la revendication 6, dans laquelle le stabilisateur est choisi dans le groupe constitué de la benzoquinone, de la naphtoquinone, de l'anthraquinone, de l'hydroquinone, de la méthoxyhydroquinone, de l'hydroxy toluène butylé, de l'acide éthylènediaminetétracétique ou d'un sel de celui-ci, et de leurs mélanges.

8. Procédé d'utilisation dans des compositions durcissables anaérobiques d'un composé représenté par la structure I : 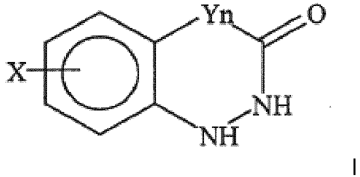 dans laquelle X est facultatif, mais lorsqu'il est présent, X représente un halogène, un alkyle, un alcényle, un cycloalkyle, un hydroxyalkyle, un hydroxyalcényle, un alcoxy, amino, un alkylène ou un alcénylène éther, un méthacrylate d'alkylène, un carbonyle, un carboxyle, un nitroso, un sulfonate, un hydroxyle, un halogénoalkyle ou un cycle hétérocyclique fusionné, où Y représente O, NH, ou CH₂, et où n vaut 0 ou 1, comprenant les étapes consistant à :
(a) utiliser une composition durcissable anaérobique comprenant un composant méthacrylate et une composition provoquant un durcissement anaérobique ;
(b) utiliser un composé représenté par la rupture I : 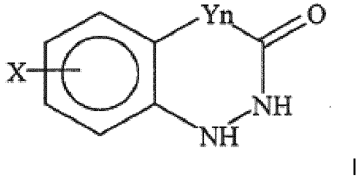 dans laquelle X est facultatif, mais lorsqu'il est présent, X représente un halogène, un alkyle, un alcényle, un cycloalkyle, un hydroxyalkyle, un hydroxyalcényle, un alcoxy, une amino, un alkylène ou alcénylène éther, un méthacrylate d'alkylène, un carbonyle, un carboxyle, un nitroso, un sulfonate, un hydroxyle, un halogénoalkyle ou un cycle aromatique, cycloaliphatique ou hétérocyclique fusionné, où Y représente O, NH, ou CHR, où R représente H ou un alkyle en C₁-C₄, et où n vaut 0 ou 1 ; et
(c) exposer la composition durcissable anaérobique et l'accélérateur de durcissement à des conditions favorables pour durcir la composition.

9. Composition selon la revendication 1, dans laquelle le composé représenté par la structure I est choisi parmi
